# EUROPEAN PATENT APPLICATION

(11) **EP 4 815 578 A1**
(43) Date of publication of application: **30.09.2026**
(21) Application number: 24906083.1
(22) Date of filing: 03.12.2024
(51) Int. Cl.: H04W 52/54

(54) **TRANSMISSION POWER CONTROL METHOD, APPARATUS AND SYSTEM**

(30) Priority: 18.12.2023 CN 202311751089
(71) Applicant: Huawei Technologies Co., Ltd., Shenzhen, Guangdong 518129 (CN)
(72) Inventor: GAO, Xiang, Shenzhen, Guangdong 518129 (CN); LIU, Ye, Shenzhen, Guangdong 518129 (CN); GUO, Zhiheng, Shenzhen, Guangdong 518129 (CN)
(74) Representative: Gill Jennings & Every LLP
(86) International application number: PCT/CN2024/136461
(87) International publication number: WO 2025/130599

(57) **Abstract**

This application relates to a transmit power control method, an apparatus, and a system. A terminal sends first information to a network device, where the first information indicates at least one power boost level supported by the terminal. The terminal receives second information from the network device, where the second information indicates a first power boost level, the first power boost level is any one of the at least one power boost level, and the first power boost level is used by the terminal to perform transmit power control. In embodiments of this application, the network device flexibly selects, from the at least one power boost level based on a network environment and other conditions, one power boost level as a power boost level configured for the terminal, so that the terminal no longer boosts a transmit power by a fixed value. In this way, a power boost level value applied by the terminal in transmit power control can adapt to different network environments, thereby improving flexibility of power control and ensuring communication quality.

## Description

### CROSS-REFERENCE TO RELATED APPLICATIONS

This application claims priority to Chinese Patent Application No. 202311751089.0, filed with the China National Intellectual Property Administration on December 18, 2023 and entitled "TRANSMIT POWER CONTROL METHOD, APPARATUS, AND SYSTEM", which is incorporated herein by reference in its entirety.

### TECHNICAL FIELD

This application relates to the field of communication technologies, and in particular, to a transmit power control method, an apparatus, and a system.

### BACKGROUND

In a wireless communication system, a transmission characteristic of electromagnetic waves results in a radio transmission path loss. To avoid degradation of communication quality caused by the radio transmission path loss, a transmitter usually boosts a transmit power, to improve demodulation performance of a receiver, thereby compensating for impact of the radio transmission path loss on the communication quality.

Currently, the transmitter usually raises the transmit power based on a power boost value configured by the receiver. However, the power boost value configured by the receiver for the transmitter is generally a fixed value. In other words, the transmitter can only boost by a fixed value each time the transmitter performs a power boost. This lacks flexibility in adapting the power boost to different network environments, cannot well adapt to network environments, and consequently, cannot ensure communication quality.

### SUMMARY

Embodiments of this application provide a transmit power control method, an apparatus, and a system, to improve flexibility of power boost control.

According to a first aspect, a transmit power control method is provided. The method may be performed by a terminal, or may be performed by another device including a function of the terminal, or may be performed by a chip system (or a chip) or another functional module. The chip system or the functional module can implement the function of the terminal. For example, the chip system or the functional module is disposed in the terminal. In the following descriptions, an example in which the method is performed by the terminal is used. The method includes: sending first information to a network device, where the first information indicates at least one power boost level supported by the terminal; and receiving second information from the network device, where the second information indicates a first power boost level, the first power boost level is any one of the at least one power boost level, and the first power boost level is used by the terminal to perform transmit power control.

In this embodiment of this application, the terminal may send, to the network device, the at least one power boost level that can be supported by the terminal. In this way, after receiving the at least one power boost level, the network device may configure, for the terminal based on the at least one power boost level, the first power boost level used for transmit power control. It can be learned that, the first power boost level is any one of the at least one power boost level, and this can resolve, to some extent, a problem that the terminal can only boost the power by a fixed value each time the terminal performs a power boost, and this lacks flexibility in adapting the power boost to different network environments, and cannot well adapt to network environments. In this way, flexibility of power control is improved and communication quality is ensured.

In an optional implementation, the method may further include: receiving third information from the network device, where the third information indicates a second power boost level, the second power boost level is selected by the network device from the at least one power boost level based on a link measurement value of the terminal when the network device determines that the terminal sends an uplink signal by using the first power boost level, and the second power boost level is different from the first power boost level. In this way, after the terminal performs transmit power control by using the first power boost level, the network device measures (or performs real-time measurement on) the communication link with the terminal, to select, from the at least one power boost level, the second power boost level different from the first power boost level based on the link measurement value of the terminal. This implements adaptation between power boost level configuration and the link, that is, the network device may dynamically update and configure the power boost level of the terminal.

In an optional implementation, the first power boost level may be a smallest value in the at least one power boost level. Therefore, when the first power boost level is the smallest value in the at least one power boost level, it can be ensured that the terminal can implement transmit power control (boost) in any case. For example, it is assumed that a largest power boost level that can be supported by the terminal at a moment after the terminal sends the at least one power boost level to the network device is less than the first power boost level randomly configured by the network device for the terminal from the at least one power boost level, for example, the randomly selected first power boost level is large. In this case, if the terminal performs transmit power control based on the large first power boost level configured by the network device, communication quality is greatly affected, and even the transmit power boost control cannot be implemented. Therefore, the smallest value selected from the at least one power boost level is configured as the first power boost level for the terminal, so that smooth power control of the terminal can be effectively ensured.

According to a second aspect, another transmit power control method is provided. The method may be performed by a network device, or by another device including a function of the network device, or may be performed by a chip system (the chip system includes a chip) or another functional module. The chip system or the functional module can implement the function of the network device. For example, the chip system or the functional module is disposed in the network device. Optionally, the network device may be an access network device. The access network device may be, for example, a base station, a base station control device, or another device in an access network. This is not limited in this application. In the following descriptions, an example in which the method is performed by the network device is used. The method includes: receiving first information from a terminal, where the first information indicates at least one power boost level supported by the terminal; and sending second information to the terminal, where the second information indicates a first power boost level, the first power boost level is any one of the at least one power boost level, and the first power boost level is used by the terminal to perform transmit power control.

In an optional implementation, the method may further include: sending third information to the terminal, where the third information indicates a second power boost level, the second power boost level is selected by the network device from the at least one power boost level based on a link measurement value of the terminal when the network device determines that the terminal sends an uplink signal by using the first power boost level, and the second power boost level is different from the first power boost level.

In an optional implementation, the first power boost level may be a smallest value in the at least one power boost level.

For technical effects brought by the second aspect or various optional implementations, refer to descriptions of the technical effects of the first aspect or the corresponding implementations. Repeated content is not described in detail again.

According to a third aspect, still another transmit power control method is provided. The method may be performed by a terminal, or may be performed by another device including a function of the terminal, or may be performed by a chip system (or a chip) or another functional module. The chip system or the functional module can implement the function of the terminal. For example, the chip system or the functional module is disposed in the terminal. In the following descriptions, an example in which the method is performed by the terminal is used. The method includes: sending first information to a network device, where the first information indicates a correspondence between different value variations of a target radio frequency requirement and different transmit power boost levels; and receiving second information from the network device, where the second information indicates a first power boost level, the first power boost level is used by the terminal to perform transmit power control, and the first power boost level is determined based on a detected current value variation of the target radio frequency requirement of the terminal and the correspondence.

In this embodiment of this application, because the terminal reports the correspondence between different value variations of the target radio frequency requirement and different transmit power boost levels to the network device, after obtaining the correspondence, the network device may configure a proper power boost level for the terminal based on value variations of the target radio frequency requirement of the terminal detected in different time periods. In this way, this can adapt to varying network environments, and can better adapt to the network environment, thereby improving flexibility of power control, and further mitigating degradation of communication quality (for example, demodulation performance) caused by a radio transmission path loss.

In an optional implementation, the target radio frequency requirement may include but is not limited to at least one of the following: an adjacent channel leakage ratio (adjacent channel leakage ratio, ACLR), an error vector magnitude (error vector magnitude, EVM), and an in-band emission (in-band emission, IBE). Because there is a specific relationship between a transmit power boost level of the terminal and a value or value range corresponding to each of the ACLR, the EVM, and the IBE, the proper and corresponding transmit power boost level of the terminal can be accurately determined based on a variation of the radio frequency requirement parameter (any one of the ACLR, the EVM, and the IBE) or the radio frequency requirement parameter combination (at least two of the ACLR, the EVM, and the IBE) included in different target radio frequency requirements in a period of time, to ensure that the terminal can improve communication quality after transmit power control.

According to a fourth aspect, yet another transmit power control method is provided. The method may be performed by a network device, or by another device including a function of the network device, or may be performed by a chip system (the chip system includes a chip) or another functional module. The chip system or the functional module can implement the function of the network device. For example, the chip system or the functional module is disposed in the network device. Optionally, the network device is an access network device. The access network device may be, for example, a base station, a base station control device, or another device in an access network. This is not limited in this application. In the following descriptions, an example in which the method is performed by the network device is used. The method includes: receiving first information from a terminal, where the first information indicates a correspondence between different value variations of a target radio frequency requirement and different transmit power boost levels; and sending second information to the terminal, where the second information indicates a first power boost level, the first power boost level is used by the terminal to perform transmit power control, and the first power boost level is determined based on a detected current value variation of the target radio frequency requirement of the terminal and the correspondence.

In an optional implementation, the target radio frequency requirement may include but is not limited to at least one of the following: an ACLR, an EVM, and an IBE.

For technical effects brought by the fourth aspect or various optional implementations, refer to descriptions of the technical effects of the third aspect or the corresponding implementations. Repeated content is not described in detail again.

According to a fifth aspect, a communication apparatus is provided. The communication apparatus may be the terminal according to the first aspect or the third aspect. Alternatively, the communication apparatus may be another entity having a function of the terminal. For example, the communication apparatus is another device having the function of the terminal, or is a chip system (or a chip) or another functional module. The chip system or the functional module can implement the function of the terminal. For example, the chip system or the functional module is disposed in the terminal. In an optional implementation, the communication apparatus includes a radio frequency apparatus and a baseband apparatus. In another optional implementation, the communication apparatus includes a transceiver unit (sometimes referred to as a transceiver module) and a processing unit (sometimes referred to as a processing module). The transceiver unit can implement a sending function and a receiving function. When the transceiver unit implements the sending function, the transceiver unit may be referred to as a sending unit (also referred to as a sending module sometimes). When the transceiver unit implements the receiving function, the transceiver unit may be referred to as a receiving unit (also referred to as a receiving module sometimes). The sending unit and the receiving unit may be a same functional module, and the functional module is referred to as the transceiver unit. The functional module can implement the sending function and the receiving function. Alternatively, the sending unit and the receiving unit may be different functional modules, and the transceiver unit is a general term for these functional modules.

In an optional implementation, the transceiver unit (or the sending unit) is configured to send first information to a network device, where the first information indicates at least one power boost level supported by the terminal; and the transceiver unit (or the receiving unit) is configured to receive second information from the network device, where the second information indicates a first power boost level, the first power boost level is any one of the at least one power boost level (that is, a power boost level selected by the processing unit or the processing module in the at least one power boost level), and the first power boost level is used by the terminal to perform transmit power control.

In an optional implementation, the transceiver unit (or the receiving unit) is configured to receive third information from the network device, where the third information indicates a second power boost level, the second power boost level is selected by the processing unit (or the processing module) from the at least one power boost level based on a link measurement value of the terminal when the processing unit (or the processing module) determines that the terminal sends an uplink signal by using the first power boost level, and the second power boost level is different from the first power boost level.

In an optional implementation, the transceiver unit (or the sending unit) is configured to send first information to a network device, where the first information indicates a correspondence between different value variations of a target radio frequency requirement and different transmit power boost levels; and the transceiver unit (or the receiving unit) is configured to receive second information from the network device, where the second information indicates a first power boost level, the first power boost level is used by the terminal to perform transmit power control, and the first power boost level may be determined by the processing unit (or the processing module) based on a detected current value variation of the target radio frequency requirement of the terminal and the correspondence.

In an optional implementation, the communication apparatus further includes a storage unit (also referred to as a storage module sometimes). The processing unit is configured to: be coupled to the storage unit and execute a program or instructions in the storage unit, so that the processing unit can control or perform, by using the transceiver unit, the method according to the first aspect or the third aspect.

According to a sixth aspect, a communication apparatus is provided. The communication apparatus may be the network device according to the second aspect or the fourth aspect. Alternatively, the communication apparatus may be another entity having a function of the network device. For example, the communication apparatus is another device having the function of the network device, or is a chip system (or a chip) or another functional module. The chip system or the functional module can implement the function of the network device. For example, the chip system or the functional module is disposed in the network device. In an optional implementation, the communication apparatus includes the baseband apparatus and a radio frequency apparatus. In another optional implementation, the communication apparatus includes a processing unit (also referred to as a processing module sometimes) and a transceiver unit (also referred to as a transceiver module sometimes). For an implementation of the transceiver unit, refer to the descriptions of the fifth aspect.

In an optional implementation, the transceiver unit (or the receiving unit) is configured to receive first information from a terminal, where the first information indicates at least one power boost level supported by the terminal; and the transceiver unit (or the sending unit) is configured to send second information to the terminal, where the second information indicates a first power boost level, the first power boost level is any one of the at least one power boost level (that is, a power boost level selected by the processing unit or the processing module in the at least one power boost level), and the first power boost level is used by the terminal to perform transmit power control.

In an optional implementation, the transceiver unit (or the sending unit) is configured to send third information to the terminal, where the third information indicates a second power boost level, the second power boost level is selected by the processing unit (or the processing module) from the at least one power boost level based on a link measurement value of the terminal when the processing unit (or the processing module) determines that the terminal sends an uplink signal by using the first power boost level, and the second power boost level is different from the first power boost level.

In an optional implementation, the transceiver unit (or the receiving unit) is configured to receive first information from a terminal, where the first information indicates a correspondence between different value variations of a target radio frequency requirement and different transmit power boost levels; and the transceiver unit (or the sending unit) is configured to send second information to the terminal, where the second information indicates a first power boost level, the first power boost level is used by the terminal to perform transmit power control, and the first power boost level may be determined by the processing unit (or the processing module) based on a detected current value variation of the target radio frequency requirement of the terminal and the correspondence.

In an optional implementation, the communication apparatus further includes a storage unit (also referred to as a storage module sometimes). The processing unit is configured to: be coupled to the storage unit and execute a program or instructions in the storage unit, so that the processing unit can control or perform, by using the transceiver unit, the method according to the second aspect or the fourth aspect.

According to a seventh aspect, a communication apparatus is provided. The communication apparatus may be a terminal, or a chip or a chip system used in the terminal. The communication apparatus includes a communication interface and a processor, and optionally, further includes a memory. The memory is configured to store a computer program. The processor is coupled to the memory and the communication interface. When the processor reads the computer program or instructions through the communication interface, the communication apparatus is enabled to perform the method performed by the terminal according to the foregoing aspects.

According to an eighth aspect, a communication apparatus is provided. The communication apparatus may be a network device, or a chip or a chip system used in the network device. The communication apparatus includes a communication interface and a processor, and optionally, further includes a memory. The memory is configured to store a computer program. The processor is coupled to the memory and the communication interface. When the processor reads the computer program or instructions through the communication interface, the communication apparatus is enabled to perform the method performed by the network device according to the foregoing aspects.

According to a ninth aspect, a communication system is provided, including a terminal and a network device. The terminal is configured to perform the method according to the first aspect, and the network device is configured to perform the method according to the second aspect; or the terminal is configured to perform the method according to the third aspect, and the network device is configured to perform the method according to the fourth aspect. Optionally, the communication system may further include another apparatus or device, for example, an apparatus other than the terminal and the network device. This is not limited.

According to a tenth aspect, a computer-readable storage medium is provided. The computer-readable storage medium is configured to store a computer program or instructions. When the computer program or the instructions are run, the methods performed by the terminal and/or the network device according to the first aspect to the fourth aspect are implemented.

According to an eleventh aspect, a computer program product including instructions is provided. When the computer program or the instructions are run on a computer, the methods according to the first aspect to the fourth aspect are implemented.

According to a twelfth aspect, a chip system is provided, including a processor and an interface. The processor is configured to: invoke instructions from the interface and run the instructions, so that the chip system implements the methods according to the first aspect to the fourth aspect.

### BRIEF DESCRIPTION OF DRAWINGS

FIG. 1 is a diagram of a network architecture to which an embodiment of this application is applied;
FIG. 2 is a diagram of another network architecture to which an embodiment of this application is applied;
FIG. 3 is a flowchart of a transmit power control method according to an embodiment of this application;
FIG. 4 is a flowchart of another transmit power control method according to an embodiment of this application;
FIG. 5 is a diagram of a structure of a communication apparatus according to an embodiment of this application; and
FIG. 6 is a diagram of another apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. The character "/" generally represents an "or" relationship between the associated objects. For example, A/B indicates A or B. At least one of the following items (pieces) or a similar expression thereof indicates any combination of these items, including a single item (piece) or any combination of a plurality of items (pieces). For example, at least one of a, b, or c may represent: a, b, c, a and b, a and c, b and c, or a, b, and c, where a, b, and c may be singular or plural.

Ordinal numbers such as "first" and "second" in embodiments of this application are used to distinguish between a plurality of objects, and are not intended to limit sizes, content, an order, a time sequence, priorities, importance degrees, or the like of the plurality of objects. For example, first information and second information may be same information, or may be different information. In addition, the names do not indicate that the two pieces of information are different in transmitters/receivers, formats, content, sizes, application scenarios, priorities, importance, or the like. In addition, in some cases, step numbers in embodiments described in this application are merely for distinguishing between different steps, but are not for limiting a sequence of the steps.

The following explains and describes some terms or concepts in embodiments of this application, to facilitate understanding by a person skilled in the art.
(1) In embodiments of this application, a terminal is a device having a wireless transceiver function, and may be a fixed device, a mobile device, a handheld device (for example, a mobile phone), a wearable device, an in-vehicle device, or a wireless apparatus (for example, a communication module, a modem, or a chip system) disposed in the foregoing device. The terminal is configured to connect people, things, machines, and the like, and may be widely used in various scenarios, for example, a terminal in a scenario, including but not limited to the following scenarios: a sensing scenario, cellular communication, device-to-device (device-to-device, D2D) communication, vehicle to everything (vehicle to everything, V2X), machine-to-machine/machine type communications (machine-to-machine /machine-type communications, M2M/MTC), the internet of things (internet of things, IoT), virtual reality (virtual reality, VR), augmented reality (augmented reality, AR), industrial control (industrial control), self driving (self driving), remote medical (remote medical), smart grid (smart grid), smart furniture, smart office, smart wearable, smart transportation, smart city (smart city), uncrewed aerial vehicle, robot, and indoor commercial scenarios (such as mobile phone projection, file sharing, and video transmission from a mobile phone to VR glasses). The terminal may also be referred to as a V2X device when used in V2X, for example, a smart car (smart car or intelligent car), a digital car (digital car), an unmanned car (unmanned car, driverless car, pilotless car, or automobile), a self-driving car (self-driving car or autonomous car), a pure electric vehicle (pure EV or Battery EV), a hybrid electric vehicle (hybrid electric vehicle, HEV), a range extended electric vehicle (range extended EV, REEV), a plug-in hybrid electric vehicle (plug-in HEV, PHEV), a new energy vehicle (new energy vehicle), or a road side unit (road site unit, RSU). Alternatively, the terminal may be a device, for example, an electricity meter or a water meter, in the D2D communication.

In addition, in this embodiment of this application, the terminal may alternatively be a terminal in an IoT system. The IoT is an important component of future information technology development. A main technical feature of the IoT is that an object is connected to a network by using a communication technology, to implement an intelligent network of human-computer interconnection and object-object interconnection.

If the various terminals described above are located in a vehicle (for example, placed in the vehicle or installed in the vehicle), the terminals may be all considered as vehicle terminals. For example, the vehicle terminal is also referred to as an on-board unit (on-board unit, OBU). The terminal in this application may alternatively be an in-vehicle module, an in-vehicle assembly, an in-vehicle component, an in-vehicle chip, or an in-vehicle unit that is disposed in a vehicle as one or more components or units. The vehicle may implement a method in this application through the in-vehicle module, the in-vehicle assembly, the in-vehicle component, the in-vehicle chip, or the in-vehicle unit that is disposed in the vehicle.

The terminal may be sometimes referred to as user equipment (user equipment, UE), a terminal device, an access station, a UE station, a remote station, a wireless communication device, a user apparatus, or the like.

In embodiments of this application, a communication apparatus configured to implement a function of the terminal may be a terminal; or may be a communication apparatus, for example, a chip system, that can support the terminal in implementing the function. The communication apparatus may be mounted in the terminal. In technical solutions provided in embodiments of this application, an example in which the communication apparatus configured to implement the function of the terminal is a terminal is used for describing the technical solutions provided in embodiments of this application.

(2) A network device in embodiments of this application includes, for example, an access network device and/or a core network device. The access network device is a device having a wireless transceiver function, and is configured to communicate with the terminal. The access network device includes but is not limited to a base station (a base transceiver station (base transceiver station, BTS), a NodeB (NodeB), an evolved NodeB (evolved node B, eNodeB)/eNB, or the next generation NodeB (the next generation node B, gNodeB)/gNB), a transmission reception point (transmission reception point, TRP), a base station evolved after a 3rd generation partnership project (3rd generation partnership project, 3GPP), an access node in a wireless fidelity (wireless fidelity, Wi-Fi) system, a wireless relay node, a wireless backhaul node, and the like. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. Alternatively, the access network device may be a radio controller, a central unit (central unit, CU), and/or a distributed unit (distributed unit, DU) in a cloud radio access network (cloud radio access network, CRAN) scenario. Alternatively, the access network device may be a base station control device. The access network device may alternatively be another device in the access network, for example, a server. This is not limited in this application. For example, a network device in a V2X technology may be a road side unit (road side unit, RSU). The following uses an example in which the access network device is a base station for description. The base station may communicate with a terminal, or may communicate with a terminal through a relay station. The terminal may communicate with a plurality of base stations in different access technologies. The core network device is configured to implement functions such as mobility management, data processing, session management, and policy and charging. Names of devices that implement core network functions in systems of different access technologies may be different. This is not limited in embodiments this application. The 5th generation (the 5th generation, 5G) mobile communication technology system is used as an example. The core network device includes an access and mobility management function (access and mobility management function, AMF), a session management function (session management function, SMF), a policy control function (policy control function, PCF), a user plane function (user plane function, UPF), or the like.

In a CU-DU architecture, the access network device may include one or more of logical network elements such as a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an ORAN system, the CU may also be referred to as an open CU (O-CU), the DU may also be referred to as an O-DU, the CU-CP may also be referred to as an O-CU-CP, the CU-UP may also be referred to as an O-CU-UP, and the RU may also be referred to as an O-RU. For ease of description, in embodiments of this application, the CU, the CU-CP, the CU-UP, the DU, and the RU are used as examples for description. Any one of the CU (or the CU-CP and the CU-UP), the DU, and the RU in embodiments of this application may be implemented by a software module, a hardware module, or a combination of a software module and a hardware module.

Optionally, in embodiments of this application, a behavior performed by a cell (for example, sending information to UE, receiving information from the UE, or processing information) may be specifically performed by a network device that provides the cell. Optionally, in embodiments of this application, if the network device is in a distributed architecture, for example, the network device includes a CU and a DU, or includes a CU-CP, a CU-UP, and a DU, that the network device sends information to the UE may be specifically that the DU included in the network device sends information to the UE; and that the network device receives information from the UE may be specifically that the DU included in the network device receives information from the UE. In addition, if the network device is in a distributed architecture, for example, the network device includes a CU and a DU, or includes a CU-CP, a CU-UP, and a DU, that the network device sends information to another network device may be specifically that the CU or the CU-CP included in the network device sends the information to a CU or a CU-CP of the another network device; and that the network device receives information from the another network device may be specifically that the CU or the CU-CP included in the network device receives the information from the CU or the CU-CP of the another network device.

In embodiments of this application, a communication apparatus configured to implement a function of the network device may be a network device, or may be an apparatus, for example, a chip system, that can support the network device in implementing the function. The apparatus may be mounted in the network device. In technical solutions provided in embodiments of this application, an example in which the apparatus configured to implement the function of the network device is the network device is used for describing the technical solutions provided in embodiments of this application.

(3) EVM may also be referred to as a vector magnitude error or an error vector magnitude, and refers to a difference between a theoretical waveform and a received actual waveform. The EVM is a root mean square value of a ratio of an average error vector signal power to an average reference signal power, and reflects an error between a measured signal (for example, a signal actually sent by the terminal) and a reference signal.

From a perspective of radio frequency, factors that cause EVM deterioration include at least non-linearity of a power amplifier (power amplifier, PA), in-phase/quadrature (in-phase/quadrature, I/Q) imbalance, phase noise, and noise of a transceiver. Therefore, the EVM is used to ensure that a modulation symbol sent by the terminal is not excessively distorted, so that demodulation of the network device is not affected. There is a correspondence between an upper limit of an EVM and a modulation order (modulation order, MO) of a signal. For example, an upper limit of an EVM for quadrature phase shift keying (quadrature phase shift keying, QPSK) is 17.5%, an upper limit of an EVM for 16 quadrature amplitude modulation (quadrature amplitude modulation, QAM) is 12.5%, and an upper limit of an EVM for 256QAM is 3.5%. In addition, a larger EVM indicates greater distortion, which affects communication performance. Optionally, in embodiments of this application, the upper limit of the EVM may also be referred to as an requirement of a radio frequency parameter EVM.
(4) IBE indicates an extent of energy leakage of a transmit signal that occupies scheduled spectrum resources to non-scheduled spectrum resources on in-band spectrum resources.
(5) ACLR indicates a ratio of a power of the transmit signal on the in-band spectrum resources to energy leakage of out-of-band spectrum resources. For different transmit power classes (power class, PC), values of transmit power classes corresponding to the ACLR are different, and the PC indicates that a related device (for example, a terminal) works at a largest transmit power (that is, a value of a transmit power class) specified in a corresponding power class (which may be denoted as a PCn, where a value of n may be but is not limited to 1, 1.5, 2, or 3, and therefore, the PCn may be specifically a PC1, a PC1.5, a PC2, or a PC3).

For example, in the PC1, a value of a transmit power class corresponding to the ACLR is 37 decibels (dB); in the PC1.5, a value of a transmit power class corresponding to the ACLR is 31 dB; in the PC2, a value of a transmit power class corresponding to the ACLR is 31 dB; and in the PC3, a value of a transmit power class corresponding to the ACLR is 30 dB. Optionally, in embodiments of this application, in different PCs, a value of a transmit power class corresponding to the ACLR may also be referred to as an requirement of the radio frequency parameter ACLR.

(6) Largest power reduction (largest power reduction, MPR) indicates that, based on the transmit PC, a protocol allows the transmit power of the terminal to be reduced to some extent, that is, a reduction amount in a largest transmit power (that is, a value of a transmit power class corresponding to the PCn of the terminal) of the terminal, to reserve a specific margin for the terminal to meet radio frequency requirements such as an EVM, an ACLR, and an IBE under any configuration. In this way, communication quality and network stability are ensured in some cases (for example, a critical point between a linear region and a non-linear region of the PA).

Optionally, a value or an upper limit of a value range of the MPR is related to an MO of a signal, a type of orthogonal frequency division multiplexing (orthogonal frequency division multiplexing, OFDM), and a type of a resource block (resource block, RB) used for data transmission. The type of the OFDM may include discrete Fourier transform-spread-orthogonal frequency division multiplexing (discrete Fourier transform-spread-orthogonal frequency division multiplexing, DFT-S-OFDM) and cyclic prefix orthogonal frequency division multiplexing (cyclic prefix orthogonal frequency division multiplexing), and the type of the RB may include an in-band RB, an out-of-band RB, and an edge RB.

Therefore, for example, when the terminal uses the DFT-S-OFDM, the QPSK, and the in-band RB, the value of the MPR is 0 dB; when the terminal uses the DFT-S-OFDM, the 16QAM, and the edge RB, the upper limit of the value range of the MPR is 3.5 dB, that is, MPR≤3.5 dB. It should be noted that the value of the MPR or the upper limit of the value range of the MPR does not necessarily change simply because one of the MO of the signal, the type of the OFDM, and the type of the RB changes. That is, if one or more of the MO of the signal, the type of the OFDM, and the type of the RB change, the value of the MPR or the upper limit of the value range of the MPR may not change.

Currently, in a wireless communication system, a transmission characteristic of electromagnetic waves results in a radio transmission path loss. For uplink communication with a limited transmit power, the radio transmission path loss brings more severe impact. Therefore, to avoid degradation of communication quality caused by the radio transmission path loss, a transmitter (for example, a terminal) usually boosts a transmit power, to improve demodulation performance of a receiver (for example, a network device), thereby compensating for impact of the radio transmission path loss on the communication quality.

Although transmit power boost solutions for a plurality of frequency ranges (frequency range, FR) have been formulated, a power boost value configured by the receiver for the transmitter is generally a fixed value, that is, the transmitter can boost the power by only a fixed value each time. The FR may include but is not limited to FR1 (410 MHz to 7125 MHz) and FR2-1 (24250 MHz to 52600 MHz). For example, in a transmit power control method, it is specified that when a preset condition is met, the receiver may configure a power boost value (for example, 1 dB) for the transmitter based on the IBE. The preset condition includes: The transmitter uses QPSK modulation, an RB used for data transmission is an RB whose MPR is 0, and the receiver configures a default network signaling (network signaling, NS) value, for example, the default NS may be specifically NS_200. It can be learned that the transmitter can only boost by a fixed value each time the transmitter performs a power boost. This lacks flexibility in adapting the power boost to different network environments, cannot well adapt to network environments, and consequently, cannot ensure communication quality.

In view of this, in embodiments of this application, the terminal may send, to the network device, at least one power boost level that can be supported by the terminal. In this way, after receiving the at least one power boost level, the network device may flexibly select, from the at least one power boost level based on a network environment and other conditions, one power boost level as a power boost level configured for the terminal, to resolve, to some extent, a problem that the terminal can only boost the power by a fixed value each time the terminal performs a power boost, and this lacks flexibility in adapting the power boost to different network environments, and cannot well adapt to network environments. In this way, flexibility of power control (boost) is improved and communication quality is ensured. For example, it is assumed that power boost levels supported and reported by the terminal to the network device are 1 dB, 2 dB, 3 dB, and 4 dB. After obtaining the power boost levels that can be supported by the terminal, the network device may select, from the four power boost levels based on currently measured link quality, receive signal quality, and the like, one power boost level as the power boost level configured for the terminal. For example, the power boost level configured for the terminal is 3 dB.

The technical solutions provided in embodiments of this application may be applied to a 4th generation (the 4th generation, 4G) mobile communication technology system, for example, a long term evolution (long term evolution, LTE) system, or may be applied to a 5G system, for example, a new radio (new radio, NR) system, or may be applied to a next generation mobile communication system or another similar communication system, for example, a 6th generation (the 6th generation, 6G) mobile communication technology system. In other words, the technical solutions provided in embodiments of this application can be implemented in any communication system in which there are entities (for example, the terminal and/or the network device) that can exchange information. Therefore, a specific type of the communication system is not limited.

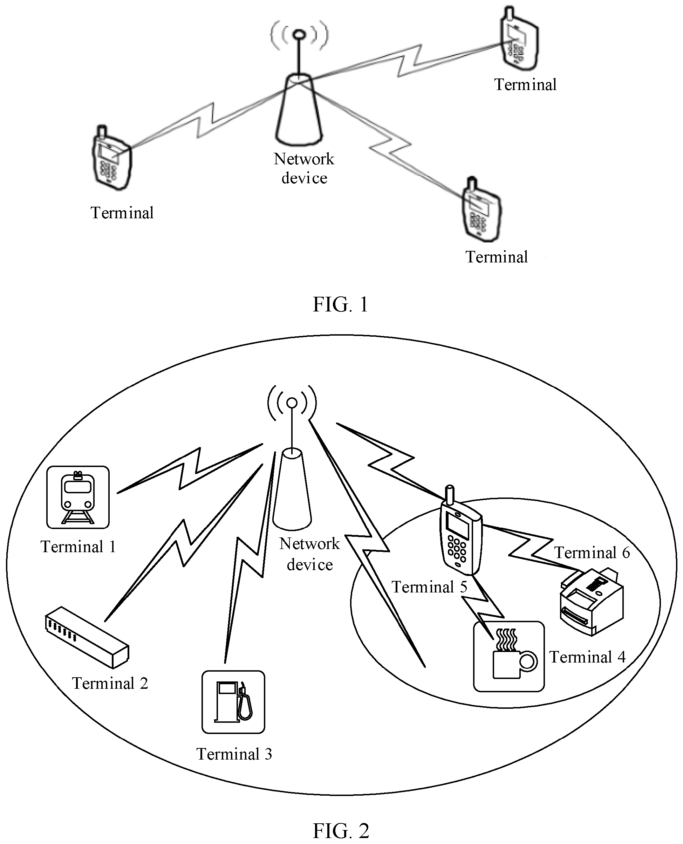

FIG. 1 is a diagram of a network architecture to which an embodiment of this application is applied. As shown in FIG. 1, the network architecture includes a network device and at least one terminal. The terminal may be at a fixed location, or may be movable. The terminal may be connected to the network device wirelessly. The network device may be, for example, a base station, and the terminal may be, for example, UE. The network device and the terminal may work in an NR system, and the terminal may communicate with the network device through the NR system. It should be noted that FIG. 1 is only a diagram. The mobile communication system may further include another network device, for example, may further include a wireless relay device and a wireless backhaul device that are not shown in FIG. 1. A quantity of network devices and a quantity of terminals that are included in the mobile communication system are not limited in embodiments of this application.

For another example, FIG. 2 is a diagram of another network architecture to which an embodiment of this application is applied. As shown in FIG. 2, a network device and a terminal 1 to a terminal 6 form a wireless communication network. In the wireless communication network, the terminal 1 to the terminal 6 serve as entities for sending uplink data, and may transmit an uplink channel (the uplink channel may carry uplink data) to the network device. Certainly, the terminal 1 to the terminal 6 may also receive downlink data sent by the network device. In addition, the terminal 4 to the terminal 6 may further form a communication system. In the communication system, the network device may send downlink data to the terminal 1, the terminal 2, the terminal 3, and the terminal 5, and the terminal 5 may also send downlink data to the terminal 4 and the terminal device 6. It should be understood that the network architecture shown in FIG. 2 is described by using an example in which only one network device is included. However, embodiments of this application are not limited thereto. For example, the network architecture may further include more network devices. Similarly, the network architecture may further include more terminals, and may further include another device, which is not shown in FIG. 2.

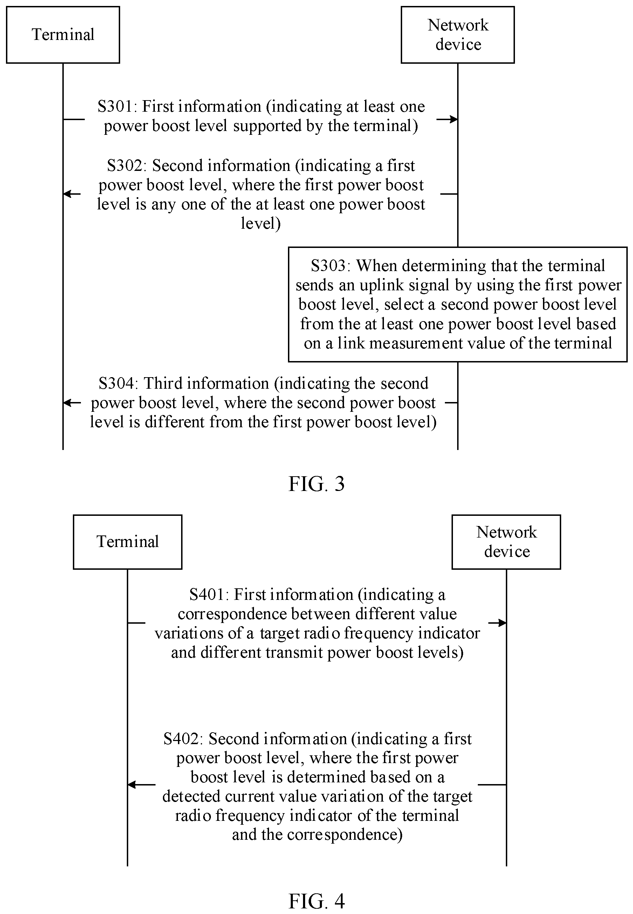

To better describe embodiments of this application, the following describes a transmit power control method according to embodiments of this application with reference to the accompanying drawings. FIG. 3 shows a transmit power control method according to an embodiment of this application. In the following description process, an example in which the method is applied to the network architecture shown in FIG. 2 is used for description. A procedure of the method is described as follows:
S301: A terminal sends first information to a network device. Correspondingly, the network device receives the first information from the terminal.

The first information may also be referred to as terminal power boost level support information, or may have another name. Therefore, the terminal may indicate, based on the first information, at least one power boost level supported by the terminal. For example, in an indication manner, the first information includes a power boost level identifier corresponding to the at least one supported power boost level. The power boost level identifier is, for example, an index of a corresponding power boost level. In this way, the network device may directly determine, based on an index of the at least one power boost level included in the first information, a power boost level corresponding to the supported at least one power boost level.

There may be no same power boost level in the at least one power boost level. For example, the terminal sends the first information to the network device, where the first information indicates four power boost levels supported by the terminal. For example, a power boost level set corresponding to the four power boost levels is {1 dB, 1.5 dB, 2 dB, 2.5 dB}. It can be learned that the power boost levels may be different from each other.

Optionally, the terminal may include the first information in uplink control information (uplink control information, UCI) and/or a first transport block (transport block, TB) sent to the network device. Therefore, efficiency of transmitting the first information by the terminal can be improved to some extent, and signaling transmission overheads can be reduced.

S302: The network device sends second information to the terminal. Correspondingly, the terminal receives the second information from the network device.

The second information indicates a first power boost level, that is, the power boost level configured by the network device for the terminal based on the at least one power boost level supported by the terminal. The first power boost level may be any one of the at least one power boost level. Optionally, the first power boost level may be a largest value in the at least one power boost level, or the first power boost level may be a smallest value in the at least one power boost level, or the first power boost level is a power boost level, in the at least one power boost level, other than the largest value and the smallest value. For example, it is assumed that the at least one power boost level supported by the terminal is 1 dB, 2 dB, 3 dB, and 4 dB. Therefore, after receiving the four power boost levels supported by the terminal, the network device may randomly select one power boost level from the four power boost levels as the first power boost level configured for the terminal. For example, the first power boost level may be 3 dB.

It may be understood that, the network device, for example, a base station, may perform measurement on a received uplink signal sent by the terminal or may perform measurement on a communication link with the terminal in a recent period of time, and so on, select a proper power boost level from the at least one power boost level as the first power boost level, and configure the first power boost level for the terminal based on a measurement result (for example, a link measurement value or a signal reception quality value).

When the first power boost level is the smallest value in the at least one power boost level, it can be ensured that the terminal can implement transmit power control in any case. For example, the foregoing four power boost levels: 1 dB, 2 dB, 3 dB, and 4 dB are still used as an example. If a largest power boost level that can be supported by the terminal at a moment after the terminal sends the four power boost levels to the network device is 2 dB, when the first power boost level randomly configured by the network device for the terminal from the four power boost levels is 3 dB (the randomly selected first power boost level is large), it can be learned that the randomly selected first power boost level 3 dB exceeds the largest power boost level 2 dB that can be supported by the terminal at the moment. In this case, if the terminal performs transmit power control based on the large first power boost level 3 dB configured by the network device, communication quality is greatly affected, and even the transmit power boost control cannot be implemented. Therefore, the smallest value selected from the at least one power boost level is configured as the first power boost level for the terminal, so that smooth power control of the terminal can be effectively ensured. Certainly, when the largest power boost level that can be supported by the terminal is large, for example, 5 dB, the network device may randomly select any power boost level from the four power boost levels 1 dB, 2 dB, 3 dB, and 4 dB, and configure the power boost level for the terminal. This is not limited in this application.

Further, after receiving the second information from the network device, the terminal may control the transmit power based on the first power boost level indicated by the second information, to compensate for impact of a radio transmission path loss on communication quality.

Optionally, because the network device may access a plurality of terminals, the network device may also receive first information separately sent by the plurality of terminals. Further, when configuring the first power boost level for the plurality of terminals, to reduce signaling overheads, the network device may uniformly configure the first power boost level for terminals whose power boost levels have an intersection in the plurality of terminals. In this way, the network device may send the same second information to the terminals whose power boost levels have an intersection. For example, it is assumed that a terminal 1 supports four power boost levels, and a power boost level set corresponding to the four power boost levels is {1 dB, 1.5 dB, 2 dB, 2.5 dB}; a terminal 2 supports three power boost levels, and a power boost level set corresponding to the three power boost levels is {1 dB, 2 dB, 3 dB}; and a terminal 3 supports five power boost levels, and a power boost level set corresponding to the five power boost levels is {0.5 dB, 1 dB, 2 dB, 2.5 dB, 3 dB}. In this case, there is an intersection between the power boost levels supported by the terminal 1, the power boost levels supported by the terminal 2, and the power boost levels supported by the terminal 3, and the intersection may be denoted as {1 dB, 2 dB}. Therefore, when configuring the first power boost level for the terminal 1, the terminal 2, and the terminal 3, the network device may randomly select one power boost level from the power boost level intersection {1 dB, 2 dB} of the three terminals as the first power boost level of the terminal 1, the terminal 2, and the terminal 3. For example, the network device uses the randomly selected power boost level 1 dB as the first power boost level configured for the terminal 1, the terminal 2, and the terminal 3, includes indication information indicating the power boost level 1 dB in a piece of common second information, and separately sends the information to the terminal 1, the terminal 2, and the terminal 3.

It should be noted that, when configuring the first power boost level for the terminals whose power boost levels have an intersection, the network device may randomly select one power boost level from the intersection as the first power boost level of the terminals whose power boost levels have an intersection, and may alternatively select one power boost level from the intersection as the first power boost level of the terminals whose power boost levels have an intersection according to a specific power boost level selection rule. In embodiments of this application, a manner of selecting the first power boost level is not specifically limited. For example, a smallest value (a smallest power boost level) in the intersection may be used as the first power boost level configured by the network device for the terminals whose power boost levels have an intersection.

Optionally, the network device may include the second information in first downlink control information (downlink control information, DCI) and/or a second TB sent to the terminal. Therefore, efficiency of transmitting the second information by the network device can be improved to some extent, and signaling transmission overheads can be reduced.

S303: When determining that the terminal sends an uplink signal by using the first power boost level, the network device selects a second power boost level from the at least one power boost level based on the link measurement value of the terminal. It should be noted that both this step and the following step S304 are optional steps. The purpose of performing this step and the following step S304 is to better adapt to a change of a network environment, adapt a more appropriate power boost level to the terminal, and improve communication reliability.

The second power boost level and the first power boost level are different, but both are used by the terminal to perform transmit power control. Optionally, the second power boost level may be any one of power boost levels, in the at least one power boost level supported by the terminal, other than the first power boost level. For example, it is assumed that the at least one power boost level supported by the terminal is 1 dB, 2 dB, 3 dB, 5 dB, and 7 dB, and the first power boost level is 3 dB. In this case, when determining that the terminal sends the uplink signal by using the first power boost level 3 dB, the network device may select the second power boost level from the at least one power boost level based on the link measurement value obtained by performing measurement on the communication link with the terminal, that is, the link measurement value of the terminal. For example, the second power boost level is 5 dB. It should be noted that the link measurement value may be used to reflect impact on demodulation performance of the network device after the terminal performs power boost by using the first power boost level.

Therefore, when determining that the terminal sends the uplink signal by using the first power boost level, the network device may determine, based on the link measurement value of the terminal, impact on demodulation performance after the power of the terminal is boosted. Once it is found that the demodulation performance can be improved by reconfiguring the power boost level for the terminal, the network device may select, from the at least one power boost level, the second power boost level different from the first power boost level and configure the second power boost level for the terminal. In this manner, after the terminal performs transmit power control by using the first power boost level, the network device measures (or performs real-time measurement on) the communication link with the terminal, to select, from the at least one power boost level, the second power boost level different from the first power boost level based on the link measurement value of the terminal. This implements adaptation between power boost level configuration and the link, that is, the network device may dynamically update and configure the power boost level of the terminal.

It should be noted that, when the network device selects the second power boost level different from the first power boost level from the at least one power boost level, the second power boost level may be randomly selected, or may be selected according to a specified second power boost level selection rule. In this embodiment of this application, the second power boost level selection rule is not specifically limited. For example, it is still assumed that the at least one power boost level supported by the terminal is 1 dB, 2 dB, 3 dB, 5 dB, and 7 dB, and the first power boost level is 3 dB. In this case, when determining that the terminal sends the uplink signal by using the first power boost level, the network device may randomly select, from four power boost levels (that is, 1 dB, 2 dB, 5 dB, and 7 dB) other than the first power boost level based on the link measurement value of the terminal, a power boost level as the second power boost level configured for the terminal. For example, the second power boost level is 3 dB. For another example, the network device selects, from the four power boost levels (1 dB, 2 dB, 5 dB, and 7 dB), a power boost level greater than the first power boost level as the second power boost level configured for the terminal. For example, the second power boost level is 5 dB.

In addition, if after the network device configures the second power boost level for the terminal, the network device detects that a link measurement value of the terminal obtained when the terminal sends the uplink signal by using the second power boost level is worse than a link measurement value of the terminal obtained when the terminal sends the uplink signal by using the first power boost level, that is, the demodulation performance is worse, the network device may reconfigure the power boost level for the terminal again in the foregoing power boost level selection and adaptation manner, until the link measurement value (or the demodulation performance) of the terminal is improved or optimized.

Optionally, if there is a mapping relationship between the power boost level and the demodulation performance, the network device may directly use a power boost level corresponding to better demodulation performance as the second power boost level adapted to the terminal, that is, configure the power boost level corresponding to the better demodulation performance for the terminal. In this way, communication quality between the terminal and the network device can be further improved.

It should be noted that, when determining that the terminal sends the uplink signal by using the first power boost level, the network device may further select the second power boost level from the at least one power boost level and adapt the second power boost level to the terminal based on a measurement result (for example, a signal reception quality value obtained by the network device by measuring the received uplink signal sent by the terminal) other than the link measurement value of the terminal. A manner in which the network device triggers selection of the second power boost level based on a specific communication parameter of the terminal is not specifically limited in this application.

S304: The network device sends third information to the terminal. Correspondingly, the terminal receives the third information from the network device.

The third information indicates the second power boost level. The second power boost level may be a power boost level, different from the first power boost level, selected by the network device from the at least one power boost level based on a measurement result (for example, the link measurement value or the signal reception quality value) obtained by the network device, for example, a base station, by performing measurement on the communication link with the terminal, performing measurement on the received uplink signal sent by the terminal, or the like, when the network device determines that the terminal sends the uplink signal by using the first power boost level.

Optionally, the network device may include the third information in second DCI and/or a third TB sent to the terminal.

It is clear that, according to the transmit power control method described in steps S301 to S304, because the first power boost level is determined from the at least one power boost level supported by the terminal, the power boost level value used by the terminal for transmit power control is no longer a fixed value, but can be a power boost level value that adapts to different network environments. In this way, the network environments can be better adapted, thereby improving flexibility of power control. In addition, when the terminal sends the uplink signal by using the configured first power boost level, the network device may further select, from the at least one power boost level based on the measurement result (for example, the link measurement value or the signal reception quality value) of the network device, the second power boost level different from the first power boost level, so that the network device can dynamically update and configure the power boost level of the terminal, to improve the communication quality (for example, the demodulation performance) and further improve the flexibility of power control.

FIG. 4 shows another transmit power control method according to an embodiment of this application. In the following description process, an example in which the method is applied to the network architecture shown in FIG. 2 is used for description. A procedure of the method is described as follows:
S401: A terminal sends first information to a network device. Correspondingly, the network device receives the first information from the terminal.

The first information may also be referred to as first relationship information, or may have another name. The first relationship indicates a correspondence between different value variations of a target radio frequency requirement and different transmit power boost levels. Therefore, the terminal may indicate, based on the first information, the correspondence between different value variations of the target radio frequency requirement and different transmit power boost levels. For example, the first information may directly carry a correspondence between different value variations of different target radio frequency requirements and different transmit power boost levels, or the first information may carry a function relational expression used to indicate the correspondence between different value variations of different target radio frequency requirements and different transmit power boost levels, or the first information may further carry a correspondence identifier, and the correspondence identifier is used to identify the correspondence between different value variations of different target radio frequency requirements and different transmit power boost levels. This is not limited in this application.

Optionally, the target radio frequency requirement may include but is not limited to at least one of the following: an ACLR, an EVM, and an IBE. In other words, the target radio frequency requirement includes any one or a combination of the ACLR, the EVM, and the IBE. It can be learned that, because there is a specific relationship between a transmit power boost level of the terminal and a value or value range (for example, an upper limit of the value range) corresponding to each of the ACLR, the EVM, and the IBE, the transmit power boost level adapted to the terminal can be accurately determined based on a variation of the radio frequency requirement parameter (any one of the ACLR, the EVM, and the IBE) or the radio frequency requirement parameter combination (at least two of the ACLR, the EVM, and the IBE) included in the target radio frequency requirements in a period of time, to ensure that the terminal can improve communication quality after transmit power control.

For example, when the target radio frequency requirement is the EVM, different value variations of the EVM may be: "a radio frequency requirement value variation of the EVM under a 256QAM modulation order is 0.5% (an upper limit of the EVM is relaxed (or increased) from 3.5% to 4%)", or "a radio frequency requirement value variation of the EVM under the 256QAM modulation order is 1% (an upper limit of the EVM is relaxed (or increased) from 3.5% to 4.5%)"; or when the target radio frequency requirement is the ACLR, different value variations of the ACLR may be: "a radio frequency requirement value variation of the ACLR in a PC3 is 1 dB (a value of a transmit power class corresponding to the ACLR is relaxed (or reduced) from 30 dB to 29 dB)", or "a radio frequency requirement value variation of the ACLR in the PC3 is 2 dB (a value of a transmit power class corresponding to the ACLR is relaxed (or reduced) from 30 dB to 28 dB)".

For another example, when the target radio frequency requirement is a combination of the EVM and the ACLR, different value variations of the EVM and the ACLR may be: "a radio frequency requirement value variation of the EVM under a 256QAM modulation order is 0.5% (an upper limit of the EVM is relaxed (or increased) from 3.5% to 4%), and a radio frequency requirement value variation of the ACLR in a PC3 is 1 dB (a value of a transmit power class corresponding to the ACLR is relaxed (or reduced) from 30 dB to 29 dB)"; or "a radio frequency requirement value variation of the EVM under the 256QAM modulation order is 1% (an upper limit of the EVM is relaxed (or increased) from 3.5% to 4.5%), and a radio frequency requirement value variation of the ACLR in a PC3 is 2 dB (a value of a transmit power class corresponding to the ACLR is relaxed (or reduced) from 30 dB to 28 dB).

Therefore, for example, the target radio frequency requirement is the EVM under the 256QAM modulation order or the ACLR in the PC3. In other words, the target radio frequency requirement is either of the two radio frequency requirements (namely, the EVM under the 256QAM modulation order and the ACLR in the PC3). With reference to the foregoing descriptions, Table 1 shows an example of a correspondence between different value variations of the two radio frequency requirements and different transmit power boost levels.

**Table 1: Example of the correspondence between different value variations of the target radio frequency requirement and different transmit power boost levels**

| Target radio frequency requirement | Value variation | Transmit power boost level |
|---|---|---|
| EVM under the 256QAM modulation order | 0.5% (the upper limit of the EVM is relaxed (or increased) from 3.5% to 4%) | 1 dB |
| EVM under the 256QAM modulation order | 1% (the upper limit of the EVM is relaxed (or increased) from 3.5% to 4.5%) | 2 dB |
| ... | ... | ... |
| ACLR in the PC3 | 1 dB (the value of the transmit power class corresponding to the ACLR is relaxed (or reduced) from 30 dB to 29 dB) | 1 dB |
| ACLR in the PC3 | 2 dB (the value of the transmit power class corresponding to the ACLR is relaxed (or reduced) from 30 dB to 28 dB) | 2 dB |
| ... | ... | ... |

Further, after obtaining the correspondence recorded in Table 1, the network device may determine, for the terminal, the transmit power boost levels (that is, power boost levels configured by the network device for the terminal) respectively corresponding to value variations of different target radio frequency requirements. For example, when the target radio frequency requirement is the EVM under the 256QAM modulation order and the corresponding value variation is 0.5%, the corresponding transmit power boost level of the terminal is 1 dB. For another example, when the target radio frequency requirement is the ACLR in the PC3 and the corresponding value variation is 1 dB, the corresponding transmit power boost level of the terminal is 1 dB.

It should be noted that, the correspondence recorded in Table 1 is merely described by using an example in which the target radio frequency requirement is a single radio frequency requirement. However, in this embodiment of this application, a type and a quantity of target radio frequency requirements are not limited. To be specific, the target radio frequency requirement may further be a radio frequency requirement like an IBE or an MPR, and the target radio frequency requirement may include two or more radio frequency requirements. For example, the target radio frequency requirement may be a radio frequency requirement combination of "the EVM under the 256QAM modulation order and the ACLR in the PC3".

Optionally, when the target radio frequency requirement includes two or more radio frequency requirements, that is, the target radio frequency requirement is a combination of different radio frequency requirements, the correspondence between different value variations of the target radio frequency requirement and different transmit power boost levels may be determined based on a correspondence between different value variations of each radio frequency requirement and different transmit power boost levels. For example, it is assumed that the target radio frequency requirement is a radio frequency requirement combination of "the EVM under the 256QAM modulation order and the ACLR in the PC3", a value variation corresponding to the EVM is 0.5%, and a value variation corresponding to the ACLR is 1 dB. In this case, when the EVM under the 256QAM modulation order is used and the corresponding value variation is 0.5%, the corresponding transmit power boost level of the terminal is 1 dB, and when the ACLR in the PC3 is used and the corresponding value variation is 1 dB, the corresponding transmit power boost level of the terminal is 1 dB. Therefore, it can be obtained that the corresponding transmit power boost level of the terminal in this case should also be 1 dB.

For another example, it is assumed that the target radio frequency requirement is a radio frequency requirement combination of "the EVM under the 256QAM modulation order and the ACLR in the PC3", a value variation corresponding to the EVM is 0.5%, and a value variation corresponding to the ACLR is 2 dB. In this case, when the EVM under the 256QAM modulation order is used and the corresponding value variation is 0.5%, the corresponding transmit power boost level of the terminal is 1 dB, and when the ACLR in the PC3 is used and the corresponding value variation is 2 dB, the corresponding transmit power boost level of the terminal is 2 dB. Therefore, it can be obtained that the transmit power boost level configured by the network device for the terminal in this case may be 1 dB or 2 dB. In other words, one transmit power boost level is selected from the transmit power boost levels respectively corresponding to the plurality of radio frequency requirements as the transmit power boost level configured by the network device for the terminal.

Optionally, when the target radio frequency requirement includes two or more radio frequency requirements, that is, the target radio frequency requirement is a radio frequency requirement combination, the correspondence between different value variations of the target radio frequency requirement and different transmit power boost levels may not be determined based on the correspondence between different value variations of each radio frequency requirement and different transmit power boost levels, that is, the correspondence may be re-established. For example, it is still assumed that the target radio frequency requirement is the radio frequency requirement combination of "the EVM under the 256QAM modulation order and the ACLR in the PC3", a value variation corresponding to the EVM is 0.5%, and a value variation corresponding to the ACLR is 1 dB. Although the EVM under the 256QAM modulation order is used and the corresponding value variation is 0.5%, the corresponding transmit power boost level of the terminal is 1 dB; and when the ACLR in the PC3 is used and the corresponding value variation is 1 dB, the corresponding transmit power boost level of the terminal is 1 dB. However, in this case, the transmit power boost level configured by the network device for the terminal may be 1.5 dB, or may be another transmit power boost level different from the transmit power boost level corresponding to the value variation of each radio frequency requirement.

Optionally, the terminal may include the first information in UCI and/or a first TB sent to the network device.

S402: The network device sends second information to the terminal. Correspondingly, the terminal receives the second information from the network device.

Optionally, the second information indicates a first power boost level, that is, the power boost level configured by the network device for the terminal based on the correspondence between different value variations of the target radio frequency requirement and different transmit power boost levels reported by the terminal. The first power boost level may be determined based on a detected current value variation of the target radio frequency requirement of the terminal and the correspondence.

For example, it is assumed that the target radio frequency requirement of the terminal is the EVM under the 256QAM modulation order. If the network device detects that the current value variation of the target radio frequency requirement is 1% (the upper limit of the EVM is relaxed (or increased) from 3.5% to 4.5%), the first power boost level configured for the terminal may be determined as 2 dB with reference to the correspondence indicated by the first information, for example, the correspondence recorded in Table 1.

For another example, it is assumed that the target radio frequency requirement of the terminal is the radio frequency requirement combination of "the EVM under the 256QAM modulation order and the ACLR in the PC3". If the network device detects that the current value variation of the target radio frequency requirement is 1% (the upper limit of the EVM is relaxed (or increased) from 3.5% to 4.5%) and 2 dB (the transmit power class corresponding to the ACLR is relaxed (or reduced) from 30 dB to 28 dB), the first power boost level configured for the terminal may be determined with reference to the correspondence indicated by the first information. For example, the first power boost level may be 2 dB.

Optionally, the network device may include the second information in DCI and/or a second TB sent to the terminal.

Further, after receiving the second information from the network device, the terminal may perform power control on the transmit power of the terminal based on the first power boost level indicated by the second information, to improve communication quality, that is, to compensate for impact of a radio transmission path loss on communication quality.

It should be noted that, when determining to use the first power boost level to send an uplink signal, the network device may further continuously detect the target radio frequency requirement of the terminal. In this way, once it is detected that the value variation of the target radio frequency requirement changes, a power boost level may be reconfigured for the terminal based on the latest value variation, that is, the network device configures the second power boost level corresponding to the latest value variation of the target radio frequency requirement for the terminal. In this way, effective transmit power control of the terminal is implemented, and flexibility of transmit power control is further improved.

It can be learned that, according to the transmit power control method described in steps S401 and S402, in this embodiment of this application, because the terminal reports the correspondence between different value variations of the target radio frequency requirement and different transmit power boost levels to the network device, after obtaining the correspondence, the network device may configure a proper power boost level for the terminal based on value variations of the target radio frequency requirement of the terminal detected in different time periods. In this way, this can adapt to varying network environments, and can better adapt to the network environment, thereby improving flexibility of power control, and further mitigating degradation of communication quality (for example, demodulation performance) caused by a radio transmission path loss.

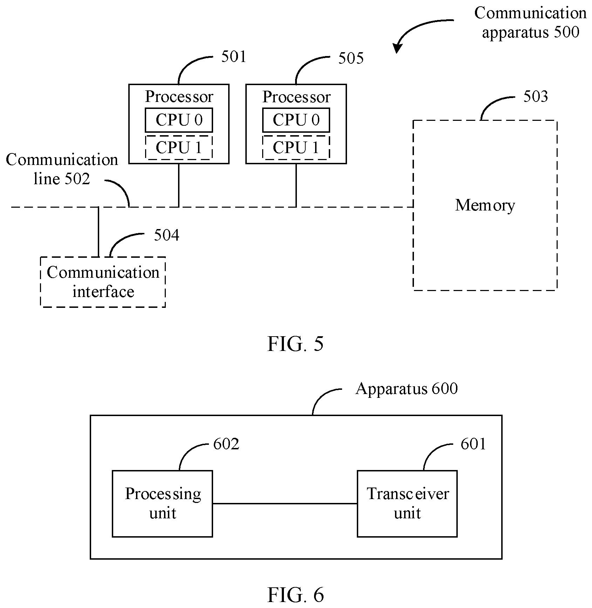

FIG. 5 is a diagram of a structure of a communication apparatus according to an embodiment of this application. The communication apparatus 500 may be the system architecture of the terminal in the embodiment shown in FIG. 3 or FIG. 4, and is configured to implement the method corresponding to the terminal in the foregoing method embodiments. Alternatively, the communication apparatus 500 may be a system architecture of the network device in the embodiment shown in FIG. 3 or FIG. 4, and is configured to implement the method corresponding to the network device in the foregoing method embodiments.

The communication apparatus 500 includes at least one processor 501. The processor 501 may be configured to perform internal processing of the apparatus, to implement a specific control processing function. Optionally, the processor 501 includes instructions. Optionally, the processor 501 may store data. Optionally, different processors may be independent components, may be located at different physical locations, or may be located on different integrated circuits. Optionally, different processors may be integrated into one or more processors, for example, integrated into one or more integrated circuits.

Optionally, the communication apparatus 500 includes one or more memories 503, configured to store instructions. Optionally, the memory 503 may further store data. The processor and the memory may be separately disposed, or may be integrated together.

Optionally, the communication apparatus 500 includes a communication line 502 and at least one communication interface 504. Because the memory 503, the communication line 502, and the communication interface 504 are all optional, the memory 503, the communication line 502, and the communication interface 504 are all represented by dashed lines in FIG. 5.

Optionally, the communication apparatus 500 may further include a transceiver and/or an antenna. The transceiver may be configured to send information to another apparatus or receive information from another apparatus. The transceiver may be referred to as a transceiver machine, a transceiver circuit, an input/output interface, or the like, and is configured to implement a transceiver function of the communication apparatus 500 through the antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 501 may include a general-purpose central processing unit (central processing unit, CPU), a microprocessor, an application-specific integrated circuit (application-specific integrated circuit, ASIC), or one or more integrated circuits configured to control program execution of solutions of this application.

The communication line 502 may include a path along which information is transmitted between the foregoing components.

The communication interface 504 uses any apparatus like a transceiver, and is configured to communicate with another device or a communication network, for example, the Ethernet, a radio access network (radio access network, RAN), a wireless local area network (wireless local area network, WLAN), or a wired access network.

The memory 503 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray optical disc, and the like), a magnetic disk storage medium or another magnetic storage device, or any other medium that can be used to carry or store expected program code in a form of instruction or a data structure and that can be accessed by a computer. However, the memory is not limited thereto. The memory 503 may exist independently, and is connected to the processor 501 through the communication line 502. Alternatively, the memory 503 may be integrated with the processor 501.

The memory 503 is configured to store computer-executable instructions for executing the solutions of this application, and the processor 501 controls execution. The processor 501 is configured to execute the computer-executable instructions stored in the memory 503, to implement the steps performed by the terminal or the network device in the embodiment shown in FIG. 3 or FIG. 4.

Optionally, the computer-executable instructions in embodiments of this application may also be referred to as application code. This is not specifically limited in embodiments of this application.

During specific implementation, in an embodiment, the processor 501 may include one or more CPUs, for example, a CPU 0 and a CPU 1 in FIG. 5.

In a specific implementation, in an embodiment, the communication apparatus 500 may include a plurality of processors, such as the processor 501 and a processor 505 in FIG. 5. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 5 is a chip, for example, a chip of the terminal or a chip of the network device, the chip includes the processor 501 (which may further include the processor 505), the communication line 502, and the communication interface 504. Optionally, the chip may include the memory 503. Specifically, the communication interface 504 may be an input interface, a pin, a circuit, or the like. The memory 503 may be a register, a cache, or the like. The processor 501 and the processor 505 may be a general-purpose CPU, a microprocessor, an ASIC, or one or more integrated circuits configured to control program execution of the transmit power control method in any one of the foregoing embodiments.

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of software functional module. It should be noted that, in embodiments of this application, module division is an example, and is merely a logical function division. In practice, another division manner may be used. For example, when division into functional modules is performed based on corresponding functions, FIG. 6 is a diagram of an apparatus. The apparatus 600 may be the terminal or the network device in the foregoing method embodiments, or a chip in the terminal or a chip in the network device. The apparatus 600 includes a processing unit 602 and a transceiver unit 601.

It should be understood that the apparatus 600 may be configured to implement the steps performed by the terminal or the network device in the transmit power control method in embodiments of this application. For related features, refer to the embodiment shown in FIG. 3 or FIG. 4. Details are not described herein again.

Optionally, functions/implementation processes of the transceiver unit 601 and the processing unit 602 in FIG. 6 may be implemented by the processor 501 in FIG. 5 by invoking the computer-executable instructions stored in the memory 503. Alternatively, functions/implementation processes of the processing unit 602 in FIG. 6 may be implemented by the processor 501 in FIG. 5 by invoking the computer-executable instructions stored in the memory 503, and functions/implementation processes of the transceiver unit 601 in FIG. 6 may be implemented through the communication interface 504 in FIG. 5.

Optionally, when the apparatus 600 is a chip or a circuit, functions/implementation processes of the transceiver unit 601 may alternatively be implemented through a pin, a circuit, or the like. Optionally, the transceiver unit 601 may include a sending unit and/or a receiving unit. The sending unit is configured to implement a sending function, and the receiving unit is configured to implement a receiving function. Alternatively, the transceiver unit 601 may be an integral module that can implement the sending function and/or the receiving function. Optionally, the transceiver unit 601 may be implemented by a transceiver.

This application further provides a computer-readable storage medium. The computer-readable storage medium stores a computer program or instructions. When the computer program or the instructions are run, the method performed by the terminal or the network device in the foregoing method embodiments is implemented. In this way, the functions in the foregoing embodiments may be implemented in a form of software functional unit and sold or used as an independent product. Based on such an understanding, the technical solutions of this application essentially, or the contributing part, or some of the technical solutions may be implemented in a form of software product. The computer software product is stored in a storage medium and includes several instructions for instructing a computer device (which may be a personal computer, a server, a network device, or the like) to perform all or some of the steps of the transmit power control methods described in embodiments of this application. The storage medium includes any medium that can store program code, such as a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the terminal or the network device in any one of the foregoing method embodiments.

An embodiment of this application further provides a processing apparatus, including a processor and an interface. The processor is configured to perform the method performed by the terminal or the network device in any one of the foregoing method embodiments.

This application further provides a communication system. The communication system may be configured to implement the method performed by the terminal or the network device in any one of the method embodiments or the possible implementations of the method embodiments. For example, the communication system has the architecture shown in FIG. 1 or FIG. 2.

This application further provides a chip or a chip system. The chip is coupled to a transceiver, and is configured to implement the method performed by the terminal or the network device in any one of the method embodiments or the possible implementations of the method embodiments. "Coupling" means that two components are directly or indirectly connected to each other. This connection may be fixed or movable, and may allow a fluid, electricity, an electrical signal, or another type of signal to communicate between the two components. The chip system may include the chip. Specifically, the chip or the chip system may be configured to perform the method performed by the terminal or the network device in any one of the method embodiments.

All or a part of the foregoing embodiments may be implemented by using software, hardware, firmware, or any composition thereof. When software is used to implement embodiments, all or a part of embodiments may be implemented in a form of computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state disk, SSD)), or the like.

Various illustrative logical units and circuits described in embodiments of this application may implement or operate the described functions by using a general-purpose processor, a digital signal processor (digital signal processor, DSP), an ASIC, a field-programmable gate array (field-programmable gate array, FPGA) or another programmable logic apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may be connected to a processor, so that the processor may read information from the storage medium and write information into the storage medium. Optionally, the storage medium may be integrated into a processor. The processor and the storage medium may be arranged in the ASIC, and the ASIC may be arranged in a terminal. Optionally, the processor and the storage medium may alternatively be arranged in different components of the terminal.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

Mutual reference may be made to content in embodiments of this application. Unless otherwise specified or unless a logical conflict occurs, terms and/or descriptions in different embodiments are consistent and may be mutually referenced, and technical features in different embodiments may be combined into a new embodiment based on an internal logical relationship between the technical features.

It can be understood that in embodiments of this application, the terminal and/or the network device may perform some or all of the steps in embodiment of this application. These steps or operations are merely examples. In embodiments of this application, other operations or variations of various operations may be further performed. In addition, the steps may be performed in a sequence different from a sequence presented in embodiments of this application, and not all the operations in embodiments of this application may need to be performed.

## Claims

1. A transmit power control method, applied to a terminal, comprising:
sending first information to a network device, wherein the first information indicates at least one power boost level supported by the terminal; and
receiving second information from the network device, wherein the second information indicates a first power boost level, the first power boost level is any one of the at least one power boost level, and the first power boost level is used by the terminal to perform transmit power control.

2. The method according to claim 1, further comprising:
receiving third information from the network device, wherein the third information indicates a second power boost level, the second power boost level is selected by the network device from the at least one power boost level based on a link measurement value of the terminal when the network device determines that the terminal sends an uplink signal by using the first power boost level, and the second power boost level is different from the first power boost level.

3. The method according to claim 1 or 2, wherein the first power boost level is a smallest value in the at least one power boost level.

4. A transmit power control method, applied to a network device, comprising:
receiving first information from a terminal, wherein the first information indicates at least one power boost level supported by the terminal; and
sending second information to the terminal, wherein the second information indicates a first power boost level, the first power boost level is any one of the at least one power boost level, and the first power boost level is used by the terminal to perform transmit power control.

5. The method according to claim 4, further comprising:
sending third information to the terminal, wherein the third information indicates a second power boost level, the second power boost level is selected by the network device from the at least one power boost level based on a link measurement value of the terminal when the network device determines that the terminal sends an uplink signal by using the first power boost level, and the second power boost level is different from the first power boost level.

6. The method according to claim 4 or 5, wherein the first power boost level is a smallest value in the at least one power boost level.

7. A transmit power control method, applied to a terminal, comprising:
sending first information to a network device, wherein the first information indicates a correspondence between different value variations of a target radio frequency requirement and different transmit power boost levels; and
receiving second information from the network device, wherein the second information indicates a first power boost level, the first power boost level is used by the terminal to perform transmit power control, and the first power boost level is determined based on a detected current value variation of the target radio frequency requirement of the terminal and the correspondence.

8. The method according to claim 7, wherein the target radio frequency requirement comprises at least one of the following: an adjacent channel leakage ratio ACLR, an error vector magnitude EVM, and an in-band emission IBE.

9. A transmit power control method, applied to a network device, comprising:
receiving first information from a terminal, wherein the first information indicates a correspondence between different value variations of a target radio frequency requirement and different transmit power boost levels; and
sending second information to the terminal, wherein the second information indicates a first power boost level, the first power boost level is used by the terminal to perform transmit power control, and the first power boost level is determined based on a detected current value variation of the target radio frequency requirement of the terminal and the correspondence.

10. The method according to claim 9, wherein the target radio frequency requirement comprises at least one of the following: an adjacent channel leakage ratio ACLR, an error vector magnitude EVM, and an in-band emission IBE.

11. A communication apparatus, wherein the communication apparatus comprises a processing unit and a transceiver unit, wherein
the transceiver unit is configured to receive and send information; and
the processing unit is configured to perform, through the transceiver unit, the method according to any one of claims 1 to 3, or perform the method according to claim 7 or 8.

12. A communication apparatus, wherein the communication apparatus comprises a processing unit and a transceiver unit, wherein
the transceiver unit is configured to receive and send information; and
the processing unit is configured to perform, through the transceiver unit, the method according to any one of claims 4 to 6, or perform the method according to claim 9 or 10.

13. A communication apparatus, wherein the communication apparatus comprises a processor and a memory, the memory stores a computer program, and the processor is configured to execute the computer program stored in the memory, so that the communication apparatus performs the method according to any one of claims 1 to 3, or the communication apparatus performs the method according to any one of claims 4 to 6, or the communication apparatus performs the method according to claim 7 or 8, or the communication apparatus performs the method according to claim 9 or 10.

14. A computer-readable storage medium, wherein the computer-readable storage medium stores a computer program, and when the computer program is run on a computer, the computer is enabled to perform the method according to any one of claims 1 to 3, or the computer is enabled to perform the method according to any one of claims 4 to 6, or the computer is enabled to perform the method according to claim 7 or 8, or the computer is enabled to perform the method according to claim 9 or 10.

15. A chip system, comprising a processor and an interface, wherein the processor is configured to: receive instructions from the interface and run the instructions, and when the processor runs the instructions, the method according to any one of claims 1 to 3 is implemented, or the method according to any one of claims 4 to 6 is implemented, or the method according to claim 7 or 8 is implemented, or the method according to claim 9 or 10 is implemented.

16. A communication system, comprising a terminal and a network device, wherein
the terminal is configured to perform the method according to any one of claims 1 to 3, and the network device is configured to perform the method according to any one of claims 4 to 6; or
the terminal is configured to perform the method according to claim 7 or 8, and the network device is configured to perform the method according to claim 9 or 10.

17. A computer program product, wherein the computer program product comprises instructions, and when the instructions are run, the method according to any one of claims 1 to 3 is implemented, or the method according to any one of claims 4 to 6 is implemented, or the method according to claim 7 or 8 is implemented, or the method according to claim 9 or 10 is implemented.
